# EUROPÄISCHE PATENTSCHRIFT

(11) **EP 2 670 624 B1**
(45) Veröffentlichungstag und Bekanntmachung des Hinweises auf die Patenterteilung: **31.10.2018**
(21) Anmeldenummer: 12708758.3
(22) Anmeldetag: 30.01.2012
(51) Int. Cl.: B60L 11/18, H02J 5/00, H02J 7/00, H02J 7/02, H02J 50/40, H02J 50/80, H02J 50/12

(54) **LADEVORRICHTUNG FÜR EINEN ELEKTRISCHEN ENERGIESPEICHER IN EINEM KRAFTFAHRZEUG**
CHARGING DEVICE FOR AN ELECTRIC ENERGY STORAGE IN A MOTOR VEHICLE
DISPOSITIF DE CHARGE POUR UN ACCUMULATEUR D'ÉNERGIE ÉLECTRIQUE DANS UN VÉHICULE AUTOMOBILE

(30) Priorität: 02.02.2011 DE 102011003543
(43) Veröffentlichungstag der Anmeldung: 11.12.2013
(73) Patentinhaber: Bayerische Motoren Werke Aktiengesellschaft, 80809 München (DE)
(72) Erfinder: WEBER, Robert, 83727 Schliersee (DE); HERZOG, Torsten, 80796 München (DE)
(86) Internationale Anmeldenummer: PCT/EP2012/051455
(87) Internationale Veröffentlichungsnummer: WO 2012/104253

(56) Entgegenhaltungen:
- WO-A1-98/32209
- WO-A1-2010/127783
- WO-A2-2010/060720

## Beschreibung

Die Erfindung betrifft eine Ladevorrichtung für ein Kraftfahrzeug, wobei das Kraftfahrzeug mit einem elektrischen Energiespeicher, einem Gleichspannungswandler sowie einer ersten, kabelgebundenen Schnittstelle zu einem ersten, externen Wechselspannungsnetz zum Laden des elektrischen Energiespeichers versehen ist.

Grundlage von ressourcenschonenden sowie klima- und umweltfreundlichen Fahrzeugkonzepten ist die Elektrifizierung des Antriebs in modernen Kraftfahrzeugen in Form von Hybrid- und Elektrofahrzeugen. Die Hauptkomponente eines elektrifizierten Antriebsstranges ist ein leistungsfähiger elektrischer Energiespeicher. Auf Basis der aktuellen Entwicklung stehen hierfür Sekundärbatterien in Lithium-lonen-Technologie mit einer Spannungslage im Hochvolt-Bereich zur Verfügung. Bei Plug-in-Hybridfahrzeugen, die auch Steckdosen-Hybridfahrzeuge genannt werden, und bei reinen Elektrofahrzeugen wird der elektrische Energiespeicher nicht nur mit im Fahrzeug generierter elektrischer Leistung geladen, sondern auch mit elektrischer Leistung von externen Quellen. Die externe Ladung kann konduktiv oder induktiv erfolgen. Bei der konduktiven Ladetechnik wird die elektrische Ladeleistung kabelgebunden durch metallische Leitung übertragen. Bei der induktiven Ladetechnik wird die Ladeleistung auch während der Fahrt durch elektromagnetische Induktion übertragen.

Bei der Ausgestaltung der Bordnetzarchitektur ist die externe Ladeinfrastruktur zu berücksichtigen. Dies geht aus dem Stand der Technik hervor. In der Schrift EP 0 116 925 A2 ist eine bordseitige Batterie-Ladevorrichtung beschrieben, um die Batterie eines Elektrofahrzeugs aus einem Wechselspannungsnetz während des Fahrzeugstillstands aus einem äußeren Wechselspannungsnetz zu laden. Im Dokument EP 0 610 258 B1 wird eine schematische Bordnetzarchitektur zum Laden der Batterie eines Elektrofahrzeugs an einer Gleichstrom-Ladestation erläutert. Das Prinzip der induktiven Batterieladung eines Elektrofahrzeugs während der Fahrt wird in der Schrift US 5 311 973 A beschrieben.

Das Dokument WO2010/127783A1 wird als nächstliegender Stand der Technik angesehen und beschreibt eine Ladeanordnung für ein Fahrzeug, dessen Energiespeicher elektrisch beladbar ist, wobei am Fahrzeug zumindest zwei Ladeschnittstellen zur Beladung des Energiespeichers vorgesehen sind, wobei ein Tiefsetzsteller und ein Hochsetzsteller eine gleichgerichtete Ladewechselspannung wandeln.

Es ist eine Aufgabe der Erfindung, eine verbesserte Ladevorrichtung für einen elektrischen Energiespeicher in einem Kraftfahrzeug anzugeben.

Gelöst wird diese Aufgabe durch eine Ladevorrichtung für einen elektrischen Energiespeicher in einem Kraftfahrzeug gemäß Anspruch 1. Vorteilhafte Ausführungsformen und Weiterbildungen der Erfindung ergeben sich aus den abhängigen Ansprüchen.

Erfindungsgemäß verfügt die Ladevorrichtung über eine zweite, induktive Schnittstelle zu einem zweiten, externen Wechselspannungsnetz zum Laden des elektrischen Energiespeichers des Fahrzeugs. Die Ausgangsleistung des Gleichspannungswandlers dient als Ladeleistung des elektrischen Energiespeichers und der Eingang des Gleichspannungswandlers ist über die erste und die zweite Schnittstelle mit elektrischer Leistung speisbar.

Es ist der besondere Vorteil dieser Erfindung, dass der elektrische Energiespeicher im Stillstand des Kraftfahrzeugs über die erste und/oder die zweite Schnittstelle ladbar ist. Die erste und die zweite Schnittstelle verfügen über eine gemeinsame Anbindung an den Gleichstromwandler für ein gleichzeitiges Laden. Der Energiespeicher kann im Stillstand auch geladen werden, falls lediglich das erste externe Wechselspannungsnetz (im Folgenden als Wechselstromladen bezeichnet) oder lediglich das zweite externe Wechselspannungsnetz (im Folgenden als Induktionsladen bezeichnet) zur Verfügung steht.

Besonders vorteilhaft ist dabei die kostengünstige Bordnetzarchitektur mit nur einem Gleichspannungswandler, der die Ladespannung am Energiespeicher einstellt. Die elektrische Leistung wird bei den drei Ladebetriebsarten (Wechselstromladen, Induktionsladen, gleichzeitiges Wechselstrom- und Induktionsladen) zum Leistungseingang des Gleichspannungswandlers geführt.

Ferner ergibt sich ein weiterer Vorteil der Erfindung bei der Fahrt. Die Ladevorrichtung erlaubt Batterieladung auch während des Fahrbetriebs. In diesem Fall wird der Energiespeicher des Fahrzeugs über die zweite Schnittstelle, d.h. die induktive Schnittstelle, geladen, da eine Leistungsübertragung via elektromagnetischer Induktion auch bei Bewegung des Fahrzeugs erfolgt.

Gemäß einer bevorzugten Ausführungsform der Erfindung verfügt die Ladevorrichtung über eine dritte, kabelgebundene Schnittstelle zu einer externen Gleichspannungsquelle zum Laden des elektrischen Energiespeichers. Der Eingang des Gleichspannungswandlers ist über die dritte Schnittstelle mit elektrischer Leistung speisbar.

Im Rahmen dieser Ausführungsform können weitere Ladebetriebsarten mit dem der Sekundärbatterie vorgeschalteten Gleichspannungswandler realisiert werden. Im Stillstand des Kraftfahrzeugs kann mit dieser Ausführung der Ladevorrichtung der Energiespeicher über die dritte Schnittstelle an einer Gleichspannungsquelle wie beispielsweise einer Gleichstrom-Ladesäule oder Gleichstrom-Tankstelle geladen werden (im Folgenden als Gleichstromladen bezeichnet).

Mit der Ladevorrichtung kann das Gleichstromladen simultan mit dem Wechselstromladen kombiniert werden. Eine weitere Kombination besteht aus Gleichstromladen mit simultanem Induktionsladen. Das Gleichstrom-Laden kann auch gleichzeitig mit Wechselstromladen und Induktionsladen erfolgen, so dass dem Gleichstromwandler elektrische Leistung simultan über die erste, zweite und dritte Schnittstelle zum Laden der Batterie bereitgestellt wird.

Gemäß einer Weiterbildung der Erfindung ist der Gleichspannungswandler der Ladevorrichtung derart ausgelegt, dass die untere Grenze des Nennbereichs der Eingangsleistung des Gleichspannungswandlers zumindest der Leistung entspricht, welche die niedrigste Leistung aus der Menge der drei maximalen Ausgangsleistungen der drei Schnittstellen darstellt. Die Auslegung der oberen Grenze des Nennbereichs der Eingangsleistung des Gleichspannungswandlers entspricht höchstens der Summe der maximalen Ausgangsleistungen der drei Schnittstellen.

Über jede der drei Schnittstellen kann ein Maximalwert an elektrischer Leistung dem Gleichspannungswandler zum Laden der Batterie bereitgestellt werden. Dieser Wert wird als maximale Ausgangsleistung der Schnittstelle bezeichnet. Jene Schnittstelle aus der Menge der drei Schnittstellen mit der kleinsten maximalen Ausgangsleistung (oder der kleinsten im Ladebetrieb üblicherweise auftretenden Ausgangsleistung falls von der maximalen Ausgangsleistung abweichend) ist für die Auslegung des Gleichspannungswandlers maßgeblich, da der Wert dieser kleinsten maximalen Ausgangsleistung (oder kleinsten üblicherweise auftretenden Ausgangsleistung) die untere Grenze des Nennbereichs der Eingangsleistung des Gleichspannungswandlers nicht unterschreitet. Die Auslegung des Gleichspannungswandlers nach dieser Ausführungsform hat zum Vorteil, dass die Ladevorrichtung eine energieeffiziente und möglichst zügige Ladung des Energiespeichers ermöglicht, falls das Laden über eine der drei Schnittstelle separat erfolgt. Unabhängig davon, welche der drei Schnittstellen betroffen ist, arbeitet der Gleichspannungswandler in einem günstigen Betriebspunkt, das bedeutet mit optimalem Wirkungsgrad. Ein günstiger Betriebspunkt ist dadurch charakterisiert, dass dieser innerhalb des Nennbereichs der Eingangsleistung des Gleichspannungswandlers liegt. In jenem Fall, dass die externe Ladeinfrastruktur ein derart geringes Maß an elektrischer Leistung zur Verfügung stellt oder der elektrische Energiespeicher derart geringe Ladungsaufnahme verfügt, dass bei separater Ladung über eine einzelne Schnittstelle eine geringere Leistung als die maximale Ausgangsleistung dieser Schnittstelle zum Gleichspannungswandler gelangt, arbeitet der Gleichspannungswandler möglicherweise bei einer Eingangsleistung die unterhalb seines eingangsseitigen Nennbereichs liegt. Jedoch liegt auch dieser Arbeitspunkt im Betriebsbereich des Gleichspannungswandlers, da der Betriebsbereich eines Gleichspannungswandlers den Leistungsbereich unterhalb des Nennbereichs einschließt.

Die obere Grenze des Nennbereichs der Eingangsleistung des Gleichspannungswandlers entspricht nach dieser Ausführungsform höchstens der Summe der drei maximalen Ausgangsleistungen. Falls die obere Grenze des Nennbereichs der Eingangsleistung des Gleichspannungswandler genau der Summe der drei maximalen Ausgangsleistungen entspricht, wird sichergestellt, dass der Gleichspannungswandler in einem günstigen Betriebspunkt, falls der Energiespeicher gleichzeitig über alle drei Schnittstellen geladen wird und über jede der drei Schnittstellen die jeweilige maximale Ausgangsleistung zum Gleichspannungswandler gelangt.

Vorzugsweise ist die Ladevorrichtung derart ausgeführt, dass der elektrische Energiespeicher für eine maximale Ladespannung von höchstens 1000 Volt ausgelegt ist. Die erste Schnittstelle ist für einen Effektivwert der ersten, externen Wechselspannung von höchstens 500 Volt ausgelegt. Die zweite Schnittstelle ist für eine maximale induzierte Spannung von höchstens 3000 Volt ausgelegt und die dritte Schnittstelle für eine maximale Spannung der externen Gleichspannungsquelle von höchstens 1000 Volt.

Diese Ausführungsform hat einen besonderen Vorteil. Die Ladevorrichtung kann über die erste und die zweite Schnittstelle mit den global am weitesten verbreiteten Wechselspannungsnetzen (insbesondere 1-phasige Netze mit 50/60 Hertz bis 240 Volt und 3-phasige Netze mit 50/60 Hertz bis 480 Volt) zum Laden des Energiespeichers gekoppelt werden. Hinsichtlich der elektrischen Auslegung kann die Ladevorrichtung über die dritte Schnittstelle sowohl mit geregelten als auch ungeregelten Gleichstrom-Ladestationen, bzw. auch Gleichstromnetzen und auch direkt an elektrischen Energiespeichern, gekoppelt werden. Durch diese spezielle Ausführungsform ist gewährleistet, dass die Ladevorrichtung eine hohe Kompatibilität mit der dem Fahrzeugnutzer voraussichtlich zur Verfügung stehenden externen Ladeinfrastruktur aufweist und dabei ein hohes Maß an Ladeeffizienz sicherstellt. Neben dem Ladewirkungsgrad geht in den Begriff der Ladeeffizienz auch die Ladeleistung ein. Ein hoher Ladewirkungsgrad bei hoher Ladeleistung äußert sich in einer kurzen Ladezeit, um ein bestimmte Ladungsmenge in den Energiespeicher zu laden. Eine kurze Ladezeit, d.h. eine hohe Ladeeffizienz ist dabei besonders vorteilhaft.

Die Erfindung beruht auf den nachfolgend dargelegten Überlegungen:
Das Laden des elektrischen Speichers bei Plug-In-Hybriden oder Elektrofahrzeugen wird konventionell konduktiv, das heisst kabelgebunden, durchgeführt. Zur Erleichterung des Ladevorgangs für den Kunden werden aktuell Verfahren zur kabellosen Energieübertragung entwickelt. Diese Ladetechnik wird als induktives Laden bezeichnet und beruht darauf, dass zum Beispiel durch eine im Boden angebrachte Spule Energie zu einer zweitem am Fahrzeug angebrachten Spule durch elektromagnetischen Induktion übertragen wird.

Beim konduktiven Laden an einer Wechselstromquelle, etwa am normalen Hausnetzanschluss, wird der Ladestrom im Fahrzeug gleichgerichtet. Die Spannung wird an die Ladespannung des elektrischen Energiespeichers angepasst. Dazu wird ein fahrzeuginternes Ladegerät, das als AC-DC-Wandler ausgeführt ist, verwendet. Das Ladegerät besteht in grober Vereinfachung aus zwei Komponenten, einem Gleichrichter und einem DC-DC-Wandler.

Konduktives Laden kann auch an einer äußeren Gleichstromquelle, zum Beispiel an einer Ladestation, erfolgen. Zum optimalen Laden des Speichers muss fahrzeugseitig ein DC-DC-Wandler zur Spannungsanpassung vorgehalten werden.

Beim induktiven Laden wird an der fahrzeugseitigen Spule eine hochfrequente Wechselspannung erzeugt. Diese wird nahe der Spule gleichgerichtet, um die elektromagnetische Strahlung zu verringern. Anschließend wird die Spannung in einem DC-DC-Wandler entsprechend der Vorgaben aus der Batteriesteuerung verändert.

Für den gemeinsamen Verbau der Konduktiv-Wechselspannung-Ladetechnik, der Konduktiv-Gleichspannungs-Ladetechnik und der Induktiv-Ladetechnik werden im Fahrzeugbordnetz neben den jeweiligen Anschluss-Systemen verschiedene Komponenten notwendig. Vereinfacht sind dies ein AC-DC-Wandler mit DC-DC-Wandler für die Konduktiv-Wechselspannung-Ladetechnik, ein DC-DC-Wandler für die Konduktiv-Gleichspannungs-Ladetechnik und eine Spule mit Gleichrichter und DC-DC-Wandler für die Induktiv-Ladetechnik. Insbesondere die drei Wandler verursachen hohe Kosten und beanspruchen geometrischen Bauraum.

Eine bedeutende Vereinfachung der notwendigen Bordnetztopologie und eine effektive Kostensenkung kann erreicht werden, indem der in dem Ladegerät für das Laden mit der Konduktiv-Wechselspannung-Ladetechnik verwendete DC-DC-Wandler derartig ausgelegt und dimensioniert wird, dass die Spannungswandlung im Zweig für die Konduktiv-Gleichspannungs-Ladetechnik und die Spannungswandlung im Zweig für die Konduktiv-Gleichspannungs-Ladetechnik am gleichen Eingang des DC-DC-Wandlers mit übernommen werden. Der technischen Aufwertung des DC-DC-Wandlers im Ladegerät steht die Einsparung von zwei weiteren DC-DC-Wandlern gegenüber, was sich in einem Kosten- und Bauraumvorteil niederschlägt. Außerdem kann ein vereinfachter Kabelbaum zum Einsatz kommen.

Im Folgenden wird anhand der beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Im Einzelnen zeigt schematisch

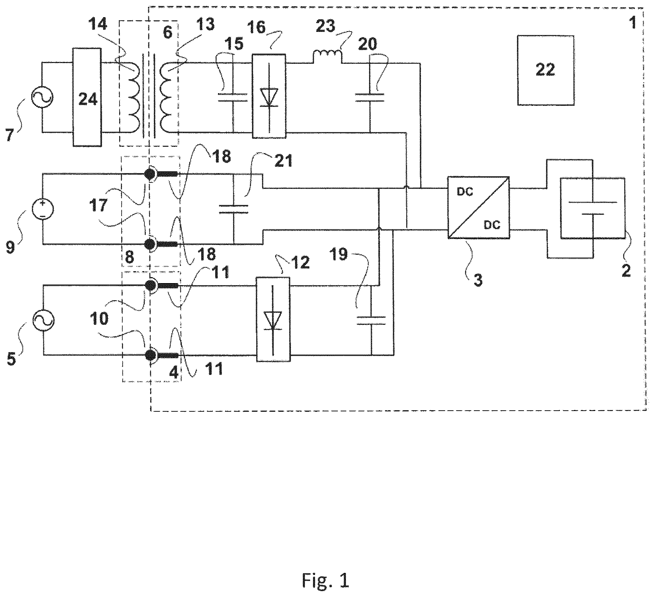

Fig. 1: Ein Blockschaltbild einer Ladevorrichtung für einen elektrischen Energiespeicher in einem Kraftfahrzeug.

Die Fig. 1 zeigt schematisch die Bordnetzarchitektur eines Elektrofahrzeugs oder eines Plug-in-Hybridfahrzeugs (1). Durch einen elektrischen Energiespeicher (2) wird elektrische Leistung für den Antrieb des Fahrzeugs oder für die Versorgung von Verbrauchern bereitgestellt. Der Energiespeicher ist beispielsweise als sekundäre Hochvolt-Batterie in Lithium-Ionen-Technologie ausgeführt und auf eine maximale Ladespannung von höchstens 1000 Volt ausgelegt. Das Laden der Batterie kann dadurch erfolgen, dass elektrische Leistung von einer externen Leistungsquelle oder von externen Leistungsquellen in das Fahrzeug übertragen wird. Die Ladung des Energiespeichers erfolgt durch einen der Batterie vorgeschalteten Gleichspannungswandler (3).

Um die Batterie von außen laden zu können, weist die Bordnetzarchitektur eine erste Schnittstelle (4) zu einem ersten, äußeren Wechselspannungsnetz (5) auf. Die erste Schnittstelle ist kabelgebunden umgesetzt, d.h. mechanisch und elektrisch als Steckdosenverbindung zwischen einem ersten Stecker (10) und einer ersten Buchse (11) ausgeführt. Die erste Schnittstelle ist auf einen Effektivwert der ersten externen Wechselspannung von höchstens 500 Volt ausgelegt. Die Wechselspannung aus dem ersten äußeren Wechselspannungsnetz wird von einem der ersten Schnittstelle nachgeschalteten, ersten Gleichrichter (12) zu einer Gleichspannung gleichgerichtet. Dem ersten Gleichrichter ist ein Zwischenkreiskondensator (19) zur Glättung der Gleichspannung nachgeschaltet. Die geglättete Gleichspannung liegt am Eingang des Gleichspannungswandlers an.

Eine zweite Ladeschnittstelle (6) zu einem zweiten, externen Wechselspannungsnetz (7) basiert auf dem Prinzip der elektromagnetischen Induktion. Die zweite Schnittstelle verfügt über eine Empfängerspule (13), wobei an der Empfängerspule durch eine externe, stromdurchflossene Erregerspule (14) eine Wechselspannung induzierbar ist. Das zweite externe Wechselspannungsnetz speist die Erregerspule. Eine Anpassung der Netzspannung und der Netzfrequenz des zweiten externen Wechselspannungsnetzes an die zweite Schnittstelle erfolgt über einen Spannungs- und Frequenzumrichter (24). Die erste und die zweite Ladeschnittstelle können vom gleichen äußeren Wechselspannungsnetz oder von verschiedenen Wechselspannungsnetzen gespeist werden. Die in der Empfängerspule des Fahrzeugs induzierte Wechselspannung fällt über einem der Empfängerspule parallel geschalteten Schwingkreiskondensator (15) ab und wird von einem nachgeschalteten, zweiten Gleichrichter (16) zu einer Gleichspannung gleichgerichtet. Diese Gleichspannung kann durch ein nachgeschaltetes induktives Bauelement (23) und einen Zwischenkreiskondensator (20) geglättet werden und liegt am Eingang des Gleichspannungswandlers an. Die zweite Schnittstelle ist für eine maximale induzierte Spannung von höchstens 3000 Volt ausgelegt. Über eine dritte Schnittstelle (8) zu einer externen Gleichstromquelle (9) kann der Energiespeicher an einer Gleichstrom-Ladestation geladen werden. Die dritte Schnittstelle zu dem äußeren Gleichstromnetz ist mechanisch und elektrisch als kabelgebundene Steckdosenverbindung zwischen einem zweiten Stecker (17) und einer zweiten Buchse (18) ausgeführt. Durch die Steckverbindung liegt die äußere Gleichspannung am Eingang des Gleichspannungswandlers an. Über einen Zwischenkreiskondensator (21) zwischen der dritten Schnittstelle und dem Eingang des Gleichspannungswandlers kann die äußere Gleichspannung geglättet werden. Die dritte Schnittstelle ist für eine maximale äußere Gleichspannung von höchstens 1000 Volt ausgelegt.

Die Ladevorrichtung verfügt über eine Ladeelektronik (22) zur Regelung und Überwachung des Batterieladevorgangs. Die Ladeelektronik weist ein bidirektionale Datenschnittstellen zum Datenbordnetz des Kraftfahrzeugs (insbesondere zum Gleichspannungswandler und zum elektrischen Energiespeicher) auf, um Steuergrößen, Regelgrößen und Kontrollgrößen des elektrischen Energiespeichers, des Gleichspannungswandlers und der drei Schnittstellen auszutauschen.

Die erste Buchse und die zweite Buchse sind Bestandteile des Kraftfahrzeugs. Der erste Stecker und der zweite Stecker sind funktionale Bestandteile der ersten und der zweiten Schnittstelle des Kraftfahrzeugs. Geometrisch sind die beiden Stecker, zum Beispiel jeweils über ein Ladekabel, mit der externen Ladeinfrastruktur verbunden. Alternativ können die erste und die zweite Schnittstelle auch derart kabelgebunden ausgeführt sein, dass Stecker und Buchse konstruktiv vertauscht ausgeführt sind. In diesem Fall sind die beiden Stecker mit dem jeweiligen Ladekabeln konstruktive Bestandteile des Kraftfahrzeugs und die beiden Buchsen Bestandteile der äußeren Ladeinfrastruktur.

Zum Beispiel kann das Wechselstromladen am ersten externen Wechselstromnetz auch derart ausgeführt sein, dass ein zum Fahrzeug gehöriges Ladekabel mit einem als Schuko-Stecker ausgeführten ersten Stecker am Hausnetz angeschlossen wird. Der erste Stecker kann auch kompatibel mit einer sogenannten Wall-Box ausgeführt sein, welche an das Hausnetz angeschlossen werden kann. Als Wall-Box wird eine Wechselstromladestation bezeichnet, die eine höhere Ladeleistungen und damit kürzere Ladezeiten als das gewöhnliche Hausnetz ermöglicht.

Die Ladevorrichtung in Fig. 1 erlaubt verschiedene Ladebetriebsarten des Energiespeichers im Stillstand des Fahrzeugs. Das Laden der Batterie über die erste Schnittstelle wird als Wechselstromladen bezeichnet. Das Laden der Batterie über die zweite Schnittstelle wird als Induktionsladen bezeichnet. Das Laden der Batterie über die dritte Schnittstelle wird als Gleichstromladen bezeichnet. Die Ladebetriebsarten können sowohl separat als auch in einem Ladevorgang kombiniert angewandt werden. Durch eine geeignete Auslegung des Gleichspannungswandlers können während eines Ladevorgangs alle Kombinationen aus den drei Ladebetriebsarten zur Anwendung kommen. Dies umfasst die vier weiteren Ladebetriebsarten Wechselstromladen mit gleichzeitigem Gleichstromladen, Wechselstromladen mit gleichzeitigem Induktionsladen, Gleichstromladen mit gleichzeitigem Induktionsladen und Wechselstromladen mit gleichzeitigem Gleichstromladen und gleichzeitigem Induktionsladen.

Die geeignete Auslegung des Gleichspannungswandlers bezieht die Auslegung der drei Schnittstellen und des elektrischen Energiespeichers ein. Jede der drei Schnittstellen weist durch ihre Auslegung eine maximale Ausgangsleistung auf. Die kleinste dieser drei Ausgangsleistungen entspricht mindestens der unteren Grenze des Nennbereichs der Eingangsleistung des Gleichspannungswandlers. Falls die Batterie in einem Ladevorgang über ein Schnittstelle bei maximaler Leistung separat geladen wird, ist dadurch gewährleistet, dass der Gleichspannungswandler bei einem günstigen Arbeitspunkt, d.h. mit geringer Verlustleistung und hohem Wirkungsgrad betrieben wird.

Die obere Grenze des Nennbereichs der Eingangsleistung des Gleichspannungswandlers entspricht höchstens dem Wert der Summe der drei maximalen Ausgangsleistungen der drei Schnittstellen. Eine Dimensionierung des Gleichspannungswandlers mit der oberen Grenze des Nennbereichs seiner Eingangsleistung bei der Summe der drei maximalen Ausgangsleistungen stellt sicher, dass bei simultaner Ladung des Energiespeichers über alle drei Schnittstellen und jeweils maximaler Ausgangsleistung der drei Schnittstellen der Gleichspannungswandler bei einem günstigen Arbeitspunkt betrieben wird.

Während der Fahrt des Fahrzeugs kann nur die Ladebetriebsart Induktionsladen durchgeführt werden, da die zweite Schnittstelle nicht kabelgebunden ausgeführt ist. Die Übertragung von Ladeleistung durch elektromagnetische Induktion erlaubt eine relative Bewegung der Empfängerspule bezüglich der Erregerspule. Um das Elektrofahrzeug oder das Plug-in-Hybridfahrzeug während der Fahrt zu laden, wird die Erregerspule als ein System von mehreren Spulen ausgeführt. Zwischen diesen Spulen und der Empfängerspule kommt es während eines Ladevorgangs zu jeweils unterschiedlichen Zeitpunkten zur maximalen elektromagnetischen Wechselwirkung.

### Bezugszeichenliste

1. Kraftfahrzeug
2. elektrischer Energiespeicher
3. Gleichspannungswandler
4. erste, kabelgebundene Schnittstelle
5. erstes, externes Wechselspannungsnetz
6. zweite induktive Schnittstelle
7. zweites, externes Wechselspannungsnetz
8. dritte, kabelgebundene Schnittstelle
9. externe Gleichspannungsquelle
10. erster Stecker
11. erste Buchse
12. erster Gleichrichter
13. Empfängerspule
14. Erregerspule
15. Schwingkreiskondensator
16. zweiter Gleichrichter
17. zweiter Stecker
18. zweite Buchse
19. Zwischenkreiskondensator
20. Zwischenkreiskondensator
21. Zwischenkreiskondensator
22. Ladeelektronik
23. induktives Bauelement
24. Spannungs- und Frequenzumrichter

## Patentansprüche

1. Ladevorrichtung für ein Kraftfahrzeug (1), wobei das Kraftfahrzeug (1) mit einem elektrischen Energiespeicher (2), wodurch elektrische Leistung für den Antrieb des Kraftfahrzeugs (1) bereitgestellt wird, einem Gleichspannungswandler (3) sowie einer ersten, kabelgebundenen Schnittstelle (4) zu einem ersten, externen Wechselspannungsnetz (5), die mechanisch und elektrisch als Steckdosenverbindung zwischen einem ersten Stecker (10) und einer ersten Buchse (11) ausgeführt ist, zum Laden des elektrischen Energiespeichers (2) über einen ersten Gleichrichter (12) versehen ist, wobei die Ladevorrichtung über eine zweite, induktive Schnittstelle (6) mit einer Empfängerspule (13) und einer Erregerspule (14) zu einem zweiten, externen Wechselspannungsnetz (7) zum Laden des elektrischen Energiespeichers (3) des Kraftfahrzeugs (1) über einen zweiten Gleichrichter (16) verfügt,
**dadurch gekennzeichnet, dass**
- die Ausgangsleistung des Gleichspannungswandlers (3) als Ladeleistung des elektrischen Energiespeichers (2) des Kraftfahrzeugs (1) dient und der Eingang des Gleichspannungswandlers (3) über die erste und die zweite Schnittstelle (4, 6) mit elektrischer Leistung speisbar ist,
- dass die Ladevorrichtung über eine dritte, kabelgebundene Schnittstelle (8), die mechanisch und elektrisch als Steckdosenverbindung zwischen einem zweiten Stecker (17) und einer zweiten Buchse (18) ausgeführt ist, zu einer externen Gleichspannungsquelle (9) zum Laden des elektrischen Energiespeichers (2) des Kraftfahrzeugs (1) verfügt,
- dass der Eingang des Gleichspannungswandlers (3) zusätzlich über die dritte Schnittstelle (8) mit elektrischer Leistung speisbar ist und
- dass der Gleichspannungswandler (3) derart ausgelegt ist, dass die untere Grenze des Nennbereichs der Eingangsleistung des Gleichspannungswandlers (3) zumindest der Leistung entspricht, welche die niedrigste Leistung aus der Menge der drei maximalen Ausgangsleistungen der drei Schnittstellen (4, 6, 8) darstellt und dass der Gleichspannungswandler (3) derart ausgelegt ist, dass die obere Grenze des Nennbereichs der Eingangsleistung des Gleichspannungswandlers (3) höchstens der Summe der maximalen Ausgangsleistungen der drei Schnittstellen (4, 6, 8) entspricht, wodurch Wechselstromladen, Induktionsladen und Gleichstromladen sowohl separat als auch in einem Ladevorgang kombiniert angewandt werden können, in dem alle Kombinationen von Wechselstromladen, Induktionsladen und Gleichstromladen zur Anwendung kommen können.

2. Ladevorrichtung nach Anspruch 1, **dadurch gekennzeichnet,**
- **dass** der elektrische Energiespeicher (2) für eine maximale Ladespannung von höchstens 1000 Volt ausgelegt ist,
- **dass** die erste Schnittstelle (4) für eine effektive Wechselspannung bis höchstens 500 Volt,
- **dass** die zweite Schnittstelle (6) für eine Induktionsspannung bis höchstens 3000 Volt und
- **dass** die dritte Schnittstelle (8) für eine Gleichspannung bis höchstens 1000 Volt ausgelegt ist.

## Claims

1. A charging device for a motor vehicle (1), wherein the motor vehicle (1) is provided with an electrical energy store (2), whereby electrical power for driving the motor vehicle (1) is provided, a DC-DC converter (3), and a first, hard-wired interface (4) to a first, external alternating voltage network (5), which is configured mechanically and electrically as a plug-and-socket connection between a first plug (10) and a first socket (11), for charging the electrical energy store (2) via a first rectifier (12), wherein the charging device has a second, inductive interface (6), with a receiving coil (13) and an exciting coil (14), to a second, external alternating voltage network (7) for charging the electrical energy store (3) of the motor vehicle (1) via a second rectifier (16),
**characterised in that**
- the output power of the DC-DC converter (3) is used as charging power of the electrical energy store (2) of the motor vehicle (1) and the input of the DC-DC converter (3) can be fed with electrical power via the first and the second interface (4, 6),
- **in that** the charging device has a third, hard-wired interface (8), which is configured mechanically and electrically as a plug-and-socket connection between a second plug (17) and a second socket (18), to an external direct voltage source (9) for charging the electrical energy store (2) of the motor vehicle (1),
- **in that** the input of the DC-DC converter (3) additionally can be fed with electrical power via the third interface (8), and
- **in that** the DC-DC converter (3) is designed in such a way that the lower limit of the nominal range of the input power of the DC-DC converter (3) corresponds at least to the power which constitutes the lowest power from the set of the three maximum output powers of the three interfaces (4, 6, 8), and
- **in that** the DC-DC converter (3) is designed in such a way that the upper limit of the nominal range of the input power of the DC-DC converter (3) at most corresponds to the sum of the maximum output powers of the three interfaces (4, 6, 8), whereby AC charging, induction charging and DC charging can be applied both separately and combined in one charging process, in which all combinations of AC charging, induction charging and DC charging can be applied.

2. A charging device according to claim 1,
**characterised in that**
- the electrical energy store (2) is designed for a maximum charging voltage of 1000 volts at most,
- **in that** the first interface (4) is designed for an effective alternating voltage of up to 500 volts at most,
- **in that** the second interface (6) is designed for an induction voltage of up to 3000 volts at most, and
- **in that** the third interface (8) is designed for a direct voltage of up to 1000 volts at most.

## Revendications

1. Dispositif de charge destiné à un véhicule (1), équipé d'un accumulateur d'énergie électrique (2) permettant de fournir la puissance électrique d'entraînement du véhicule (1), d'un convertisseur de tension continue (3) ainsi que d'une première interface (4) reliée par une liaison filaire à un premier réseau de tension alternative externe (5) qui est réalisée mécaniquement et électriquement sous la forme d'une liaison par enfichage entre une première fiche mâle (10) et une première prise femelle (11) pour charger l'accumulateur d'énergie électrique (2) par l'intermédiaire d'un premier redresseur (12), le dispositif de charge étant équipé d'une seconde interface inductive (6) comportant une bobine de réception (13) et une bobine d'excitation (14) avec un second réseau de tension alternative externe (7) pour permettre de charger l'accumulateur d'énergie électrique (3) du véhicule par l'intermédiaire d'un second redresseur (16),
**caractérisé en ce que**
- la puissance de sortie du convertisseur de tension continue (3) sert de puissance de charge de l'accumulateur d'énergie électrique (2) du véhicule (1) et l'entrée de ce convertisseur de tension continue (3) peut être alimentée en puissance électrique par l'intermédiaire de la première interface et de la seconde interface (4, 6),
- le dispositif de charge est équipé d'une troisième interface (8) reliée par une liaison filaire qui est réalisée mécaniquement et électriquement sous la forme d'une liaison par enfichage entre une seconde fiche mâle (17) et une seconde prise femelle (18) à une source de tension continue externe (9) pour permettre de charger l'accumulateur d'énergie électrique (2) du véhicule (1),
- l'entrée du second convertisseur de tension continue (3) peut en outre être alimentée en puissance électrique par l'intermédiaire de la troisième interface (8), et
- le convertisseur de tension continue (3) est réalisé de sorte que la limite inférieure de la plage nominale de la puissance d'entrée du convertisseur de tension continue (3) corresponde au moins à la puissance qui constitue la plus faible puissance parmi la valeur des trois puissances de sortie maximum des trois interfaces (4, 6, 8), et
- le convertisseur de tension continue (3) est réalisé de sorte que la limite supérieure de la plage nominale de la puissance d'entrée du convertisseur de tension continue (3) corresponde au maximum à la somme des puissances de sortie maximum des trois interfaces (4, 6, 8), de sorte que les charges de courant alternatif, les charges d'induction et les charges de courant continu puissent être utilisées séparément, et également en combinaison dans un processus de charge dans lequel toutes les combinaisons de charges de courant alternatif, de charges d'induction et de charges de courant continu peuvent être utilisées.

2. Dispositif de charge conforme à la revendication 1,
**caractérisé en ce que**
- l'accumulateur d'énergie électrique (2) est conçu pour une tension de charge maximum d'au plus 1000 Volts,
- la première interface (4) est conçue pour une tension alternative efficace jusqu'à au plus 500 Volts,
- la seconde interface (6) est conçue pour une tension d'induction allant jusqu'à au plus 3000 Volts, et
- la troisième interface (8) est conçue pour une tension continue allant jusqu'à au plus 1000 Volts.
